# EUROPÄISCHE PATENTSCHRIFT

(11) **EP 2 547 927 B1**
(45) Veröffentlichungstag und Bekanntmachung des Hinweises auf die Patenterteilung: **07.11.2018**
(21) Anmeldenummer: 11714630.8
(22) Anmeldetag: 11.03.2011
(51) Int. Cl.: F16D 66/02

(54) **SENSOREINHEIT FÜR EINE SCHEIBENBREMSE**
SENSOR UNIT FOR A DISK BRAKE
ENSEMBLE CAPTEUR POUR UN FREIN À DISQUE

(30) Priorität: 17.03.2010 DE 202010003737 U
(43) Veröffentlichungstag der Anmeldung: 23.01.2013
(73) Patentinhaber: Haldex Brake Products AB, 261 24 Landskrona (SE)
(72) Erfinder: WELIN, Hans, S-260 13 Sankt Ibb (SE)
(74) Vertreter: Habermann, Hruschka & Schnabel
(86) Internationale Anmeldenummer: PCT/EP2011/001208
(87) Internationale Veröffentlichungsnummer: WO 2011/113553

(56) Entgegenhaltungen:
- EP-A1- 1 069 336
- DE-A1- 2 254 990
- DE-B3- 10 356 801
- JP-A- 10 141 407
- US-A- 5 632 359

## Beschreibung

Die vorliegende Erfindung betrifft eine Sensoreinheit zur Bestimmung des Verschleißes von Bremsbelägen bei einer Scheibenbremse, insbesondere für ein Nutzfahrzeug.

Sensoreinheiten zur Verschleißdetektion bei Scheibenbremsen sind in den unterschiedlichsten Ausführungen bekannt.

Aus der EP 0 492 143 ist es beispielsweise bekannt, den Verschleiß der Bremsbeläge an dem bremsscheibenabgewandten Ende einer Nachstellspindel abzugreifen, indem die Drehung der Nachstellspindel, die mit der das verschleißbedingte Lüftspiel ausgleichenden translatorischen Bewegung des Bremsbelags korreliert, als Maß herangezogen wird. Ein ähnliches Verfahren ist in der EP 0 566 006 beschrieben worden.

Die DE 43 12 377 zeigt eine Sensoreinrichtung, bei der vorzugsweise mittels eines linearen Potentiometers die Verschiebebewegung der Bremsbetätigungseinrichtung im Bremssattel detektiert wird.

Aus der EP 0 784 162 ist eine Verschleißüberwachungsvorrichtung bekannt, bei der mittels eines Getriebes die Bewegung einer Druckspindel detektiert wird. Die Druckspindel weist hierzu eine Zahnstange auf, die mit einem Zahnrad einer Sensoreinheit kämmt.

Aus der WO 2004/111484 der Anmelderin ist es bekannt, die Bewegung der Druckspindel linear an der bremsscheibenabgewandten Stirnseite der Druckspindel abzugreifen.

Allen Lösungen aus dem Stand der Technik ist gemeinsam, dass sie keine genaue Verschleißsensierung sicherstellen können, da stets Toleranzen im Bremsbetätigungsmechanismus sowie Schwingungen und Verspannungen im Bremssattel das Messergebnis beeinflussen und sich so auf die Genauigkeit negativ auswirken.

Weitere Beispiele für Sensoreinrichtungen offenbaren die DE 103 56 801 B3, die JP 10 141407 A und die EP 1 069 336 A1, wobei jedoch die Messgenauigkeit nicht immer gewährleistet werden kann, da diese Sensoreinrichtungen zumindest teilweise nicht vor Kontamination durch Schmutz oder Abrasionspartikel geschützt sind.

Ausgehend von den aus dem Stand der Technik bekannten Nachteilen ist es eine Aufgabe der Erfindung, eine Sensoreinheit zur Bestimmung des Belagverschleißes bereitzustellen, die von nachteiligen Einflüssen aus der Umgebung im Bremssattel weitestgehend entkoppelt ist.
Darüber hinaus ist es eine Aufgabe der Erfindung, eine Sensoreinheit zur Verfügung zu stellen, die einfach zu montieren und demontieren ist.
Gelöst werden diese Aufgaben jeweils mit einer Sensoreinrichtung nach Anspruch 1. Die erfindungsgemäße Sensoreinrichtung kann sowohl in Gleitsattel-Scheibenbremsen als auch Festsattel-Scheibenbremsen zum Einsatz kommen. Kern der Erfindung liegt demzufolge darin, dass die Sensoreinrichtung für den Belagverschleiß mittelbar oder unmittelbar mit dem Druckstück zusammenwirkt, wobei die Sensoreinrichtung als Einheit rückwärtig in das Gehäuse des Bremssattels einsetzbar ist und das Gehäuse des Bremssattels bis zu einem Druckstück, insbesondere parallel zu der Achse der Bremsscheibe, frei durchsetzt.
Das Druckstück ist Bestandteil des Bremsbetätigungsmechanismus, das, unabhängig von dessen Ausgestaltung, unmittelbar an dem Bremsbelag bzw. an dessen Belaghalter angreift. Das Druckstück wird mittels einer Nachstelleinrichtung linear nachgestellt, um das verschleißbedingte Spiel zwischen Bremsbelag und Bremsscheibe auszugleichen.
Die Sensoreinrichtung ist als ein Modul ausgebildet, welches insgesamt ausgetauscht werden kann. In dem Gehäuse des Bremssattels ist dabei eine entsprechende Aufnahmeöffnung vorgesehen, in welcher die Sensoreinrichtung dicht eingefügt und fixiert wird.

Die Sensoreinrichtung weist ein Übertragungselement zum Übertragen der linearen Bewegung des Druckstücks in eine Rotationsbewegung und ein Sensorelement zur Erfassung der Rotationsbewegung auf.

Das Übertragungselement ist als eine an dem Druckstück angreifende Hülse ausgebildet, die relativ zu einem stationär, aber drehbar gelagerten Gewindeelement verschieblich angeordnet ist. Die Hülse steht mit dem Gewindeelement derart in Eingriff, dass beim Verschieben der Hülse, zusammen mit der linearen Bewegung des Druckstücks, das Gewindeelement in Drehung versetzt wird. An seinem bremsscheibenabgewandten Ende wirkt das Gewindeelement mit zumindest einem Sensorelement berührungslos zusammen.

Da das Gewindeelement lediglich rotiert, erfasst das Sensorelement die Drehbewegung, welche in einer entsprechenden Verwertungsschaltung des Sensorelements in den tatsächlich vorhandenen Verschleiß umgerechnet wird, der sich aus der durch das Druckstück vollführten linearen Nachstellbewegung ergibt.

Bevorzugt ist das zumindest eine Sensorelement als ein Hall-Sensor ausgebildet und wirkt mit zumindest einem an dem bremsscheibenabgewandten Ende des Gewindeelements angeordneten Magneten in an sich bekannter Art und Weise zusammen.

Um die Detektion des Verschleißes zu vereinfachen, ist in einer bevorzugten Ausführungsform die Gewindesteigung des Gewindeelements derart gewählt, dass über die gesamte mögliche lineare Verschiebung der Hülse durch das Gewindeelement maximal eine vollständige Drehbewegung durchgeführt wird. So lässt sich die Verwertungsschaltung vereinfachen, da nicht mehr als eine Umdrehung entsprechend einem maximal möglichen Verschleiß zugeordnet werden muss.

Um stets einen einwandfreien Kontakt der Hülse mit dem Druckstück sicherzustellen, insbesondere unter den im Bremsenbereich gegebenen Schwingungs- und Rüttelbelastungen, steht die Hülse in Axialrichtung unter Vorspannung. Eine das Gewindeelement umgebenden Feder stützt sich zwischen einem hinteren Gehäuseabschnitt der Sensoreinrichtung und der Hülse ab.

Die Erfindung zeichnet sich grundsätzlich durch den Vorteil aus, dass zur Montage der Sensoreinheit und deren Befestigung im Bremssattel nur sehr wenige Befestigungsmittel notwendig sind.

Darüber hinaus wird die Relativbewegung des Druckstücks und damit des Bremsbelags direkt abgegriffen, so dass sowohl weitere Komponenten des Bremsbetätigungsmechanismus als auch der Bremssattel selbst keinen Einfluß auf das Messergebnis nehmen können.

Weitere Vorteile und Merkmale der vorliegenden Erfindung ergeben sich aus dem nachfolgend anhand der beiliegenden Zeichnungen dargestellten Ausführungsbeispiel. Es zeigen
- Fig. 1: eine Anordnung einer Sensoreinheit für die Bestimmung des Belagverschleißes gemäß der Erfindung in einem Bremssattel einer Scheibenbremse;
- Fig. 2: die Sensoreinheit schematisch in Schnittdarstellung in ihrer Ursprungslage; und
- Fig. 3: die Sensoreinheit schematisch in Schnittdarstellung in einem ausgefahrenen Zustand.

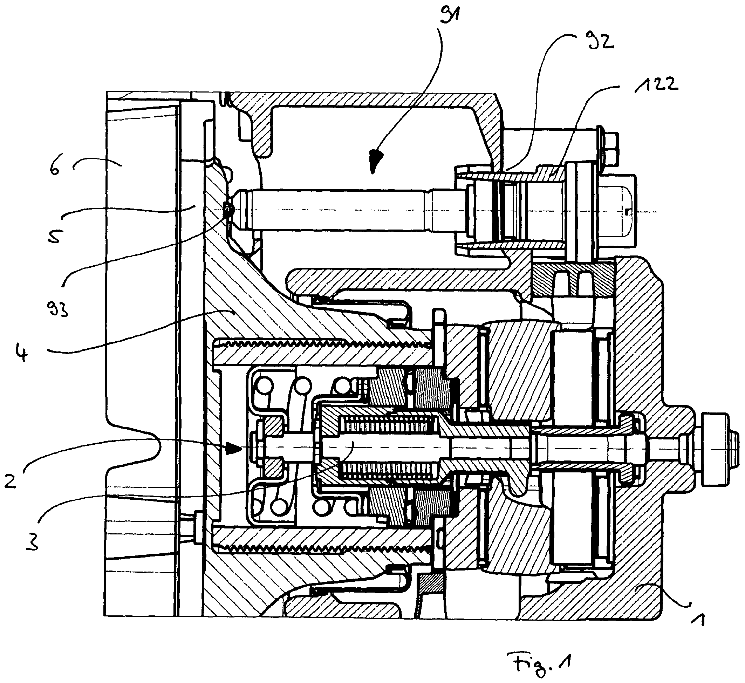

In Fig. 1 ist eine Teilsschnittdarstellung durch einen Bremssattel 1 einer Scheibenbremse gezeigt, in der die Anordnung der erfindungsgemäßen Sensoreinheit 91 zu erkennen ist.

Ein Bremsbetätigungsmechanismus 2 ist auf einem zentralen Stab 3 im Gehäuse des Bremssattels 1 koaxial zu der Achse der hier nicht dargestellten Bremsscheibe befestigt und funktional geführt.

Der Bremsbetätigungsmechanismus 2 weist ein Druckstück 4 auf, das über einen Bremsbelaghalter 5 unmittelbar mit einem Bremsbelag 6 zusammenwirkt. D.h. die translatorische Bewegung des Bremsbelags 6, auch während der Verschleißnachtstellung, ist identisch zu der Verschiebebewegung des Druckstücks 4, da der Belaghalter 5 fest mit dem Druckstück 4 in Verbindung steht.

Der Bremsbetätigungsmechanismus 2 weist zu Zwecken der Verschleißnachstellung eine Nachstelleinrichtung auf, auf deren Wirkungsweise hier nicht näher eingegangen werden soll.

Die Sensoreinheit 91 wird rückseitig durch eine Aufnahmeöffnung 92 in das Gehäuse des Bremssattels 1 eingeführt. An ihrem bremsscheibenseitigen Ende weist die Sensoreinheit 91 ein Mittel 93 zur Verbindung mit dem Druckstück 4 auf, beispielsweise ein wieder lösbares Klemm- oder Rastelement oder eine Steckverbindung mittels eines Stifts, das mit einem entsprechenden Element an dem Druckstück 4 zusammenwirkt.

Gemäß der Erfindung ist die Sensoreinheit 91 folglich so ausgelegt, dass sie die Relativbewegung des Druckstücks 4 gegenüber dem Bremssattel 1 während der Nachstellung des Lüftspiels detektiert.

Die Sensoreinheit 91 durchsetzt den Innenraum des Bremssattels 1 frei und parallel zu der Achse des Stabs 3.

Dabei ist die Sensoreinheit 91 einerseits in der Aufnahmeöffnung 92 im Bremssattel 1 und anderseits auf der gegenüberliegenden Seite durch die Verbindung mit dem Druckstück 4 mittels des Stiftelements 93 geführt, so dass eine im Wesentlichen strenge axiale Beweglichkeit ohne ein Kippen realisiert wird.

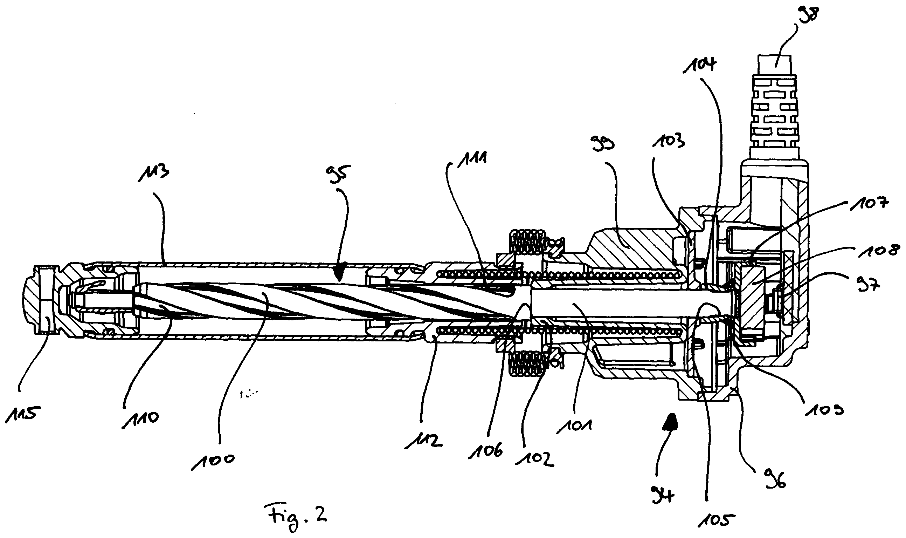

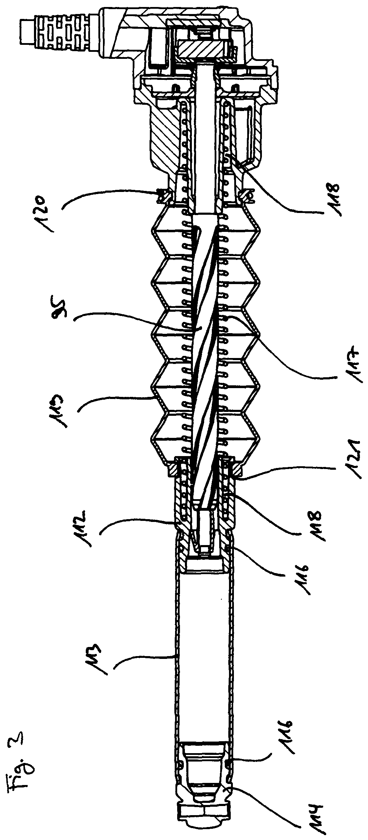

Wie in den Figuren 2 und 3 zu erkennen ist, besteht die Sensoreinheit 91 aus einem stationären, rückwärtigen Gehäuse 94, in dem ein Gewindeelement 95, beispielsweise eine Spindel, drehbar, aber nicht verschieblich geführt ist.

Das Gehäuse 94 weist einen rückwärtigen Gehäuseaufsatz 96 auf, der sich im eingebauten Zustand der Sensoreinheit 91 außerhalb des Gehäuses des Bremssattels 1 befindet. Dieser Gehäuseaufsatz 96 beinhaltet ein Sensorelement 97, welches bevorzugt aus zumindest einem Hall-Element besteht. An dem Gehäuseaufsatz 96 führt eine Leitung 98 zu einem Bordcomputer-Netzwerk, um den aktuellen Verschleißzustand abgreifen zu können.

Der Gehäuseaufsatz 96 ist auf einem Gehäuselagerteil 99 aufgesetzt und mit diesem fest, aber lösbar verbunden. Die Sensoreinheit 91 ist mittels des Gehäuselagerteils 99 in der Aufnahmeöffnung 92 des Bremssattels 1 befestigt.

Das Gehäuselagerteil 99 dient einerseits der drehbaren Lagerung der Spindel 95 und anderseits der Verbindung eines relativ zu diesem verschieblichen Übertragungselements.

Die Spindel 95, die einen Gewindeabschnitt 100 und einen Zylinderabschnitt 101 aufweist, ist mit letzterem in einer Führung 102 des Gehäuselagerteils 99 drehbar gelagert. Dabei ist die Spindel 95 axial in der vom Druckstück 4 abgewandten Richtung durch einen schulterartigen Übergang 106 zwischen dem Gewindeabschnitt 100 und dem Zylinderabschnitt 101 fixiert, der an der Führung 102 anstößt. In der auf das Druckstück 4 gerichteten Axialrichtung wird die Spindel 95 durch eine Lagerhülse 104 axial positioniert und fixiert. Die Lagerhülse 104 stützt sich hierfür an einem Deckel 103 ab, der in das Gehäuselagerteil 99 eingesetzt ist. Des Weiteren greift die Lagerhülse 104 mit Zungen 109 in eine Fase 105 des Zylinderabschnitts 101 ein.

An dem rückwärtigen Ende der Lagerhülse 104 ist eine Führungsschale 107 vorgesehen, in der zumindest ein mit dem Ende der Spindel 95 rotationsfest verbundener Magnet 108 befestigt ist.

Der Magnet 108 dreht sich mit Abstand über dem Hall-Element des Sensorselements 97. Es handelt sich demzufolge um eine berührungslose Detektion des Verschleißes.

Der Gewindeabschnitt 100 der Spindel 95 weist ein Gewinde 110 mit einer sehr hohen Steigung auf. Das Gewinde 110 steht über ein Zapfenelement 111 mit einem Verschiebeblock 112 in Eingriff.

Der Verschiebeblock 112 ist relativ zu dem Gehäuselagerteil 99 beweglich und weist eine Hülse 113 auf, in das sich der Gewindeabschnitt 100 der Spindel 95 erstreckt. Die Hülse 113 endet in einem Endgehäuse 114, das eine Öffnung 115 für das Stiftelement 93 zur Verbindung mit dem Druckstück 4 aufweist. Die Hülse 113 dient zusammen mit Dichtringen 116 dem Schutz des Gewindeabschnitts 100 vor Schmutz.

Wie aus den Fig. 2 und 3 zu ersehen ist, verschiebt sich die aus dem Endgehäuse 114, der Hülse 113 und dem Verschiebeblock 112 bestehende Übertragungseinheit mit dem Druckstück 4 in Axialrichtung auf die Bremsscheibe zu oder von dieser weg. Diese Verschiebebewegung, aus welcher sich die Nachstellbewegung für den Verschleiß ableiten lässt, wird über die Kopplung mit dem Zapfenelement 111 in eine Drehbewegung der Spindel 95 transformiert, wobei die so hervorgerufene Rotation der Spindel 95 wiederum über den rotierenden Magneten 108 von dem Hall-Element 97 detektiert und dann entsprechend in einer Schaltungselektronik ausgewertet wird.

Gemäß der Erfindung ist die Steigung des Gewindes 110 so gewählt, dass die gesamte mögliche Länge des axialen Verschiebewegs der Hülse 113 bzw. des Verschiebeblocks 112 maximal in einer vollständigen Umdrehung der Spindel 95 resultiert. D.h. der Verschiebeweg der Nachstellung, der maximal möglich ist, bis die Bremsbeläge 8 und die Bremsscheibe vollständig abgeschliffen sind, überschreitet zu keinem Zeitpunkt eine 360°-Drehung der Spindel 95. Hierdurch kann die Messgenauigkeit über eine einfachere Schaltung erhöht werden.

Um stets einen einwandfreien Kontakt des Endgehäuses 114 mit dem Druckstück 4 zu gewährleisten und um stets eine einwandfreie Führung des Zapfenelements 111 in dem Gewinde 110 bei den Verschiebebewegungen des Verschiebeblocks 112 aufrechtzuerhalten, steht dieser gegenüber dem Gehäuselagerteil 99 unter einer Vorspannung, die durch eine Feder 117 zwischen diesen beiden Elementen bereitgestellt wird, die in entsprechenden Ausnehmungen 118 in diesen Elementen verankert ist. Die Spindel 95 und die Feder 117 sind gegenüber dem Innenraum des Bremssattels 1 durch einen Faltbalg 119 geschützt, der auf der einen Seite durch einen Klemmring 120 auf dem Gehäuselagerteil 99 und auf der anderen Seite in einer Nut 121 in dem Verschiebeblock 112 verliersicher befestigt ist.

Zur besseren Führung und Ausrichtung der Sensoreinheit 91, so dass diese stets parallel zu dem Stab 22 verläuft, ohne zu kippen, ist das Gehäuselagerteil 99 von einer Montagehülse 122 aufgenommen, die in die Aufnahmeöffnung 92 des Bremssattels 1 eingefügt ist.

Es wird deutlich, dass die erfindungsgemäße Sensoreinheit 91 als Gesamtheit in dem Bremssattel 1 montiert und entnommen werden kann, ohne dass an übrigen Bauteilen des Bremsbetätigungsmechanismus 2 gearbeitet werden muss oder Teile davon zu Zwecken einer besseren Zugänglichkeit entfernt werden müssten. Um ein defektes Sensorelement 97 auszutauschen, ist es auch nicht notwendig, die gesamte Sensoreinheit auszutauschen, es genügt bereits, den Gehäuseaufsatz 96 von dem Gehäuselagerteil 99 abzunehmen.

Das Prinzip, den Verschließ über die von dem Druckstück 4 vollführte lineare Nachstellbewegung zu erfassen, gestattet die Verwendung einer relativ einfachen und daher funktionssicheren Verwertungselektronik. Darüber hinaus, da keine weiteren Komponenten des Bremsbetätigungsmechanismus 2 auf die zu detektierende Bewegung Einfluss nehmen, lässt sich die Genauigkeit der Messung erhöhen.

**Bezugszeichenliste:**

| | | | |
|---|---|---|---|
| 1 | Bremssattel | 116 | Dichtringe |
| 2 | Bremsbetätigungsmechanismus | 117 | Feder |
| 3 | Stab | 118 | Ausnehmungen |
| 4 | Druckstück | 119 | Faltenbalg |
| 5 | Belaghalter | 120 | Klemmring |
| 6 | Bremsbelag | 121 | Nut |
| | | 122 | Montagehülse |
| 91 | Sensoreinheit | | |
| 92 | Aufnahmeöffnung | | |
| 93 | Stiftelement | | |
| 94 | Gehäuse | | |
| 95 | Gewindeelement/Spindel | | |
| 96 | Gehäuseaufsatz | | |
| 97 | Sensorelement/Hall-Element | | |
| 98 | Leitung | | |
| 99 | Gehäuselagerteil | | |
| 100 | Gewindeabschnitt | | |
| 101 | Zylinderabschnitt | | |
| 102 | Führung | | |
| 103 | Deckel | | |
| 104 | Lagerhülse | | |
| 105 | Fase | | |
| 106 | Schulterartiger Übergang Führungsschale | | |
| 107 | Magnet | | |
| 108 | Zungen | | |
| 109 | Gewinde | | |
| 110 | Zapfenelement | | |
| 111 | Verschiebeblock | | |
| 112 | Hülse | | |
| 113 | Endgehäuse | | |
| 114 | | | |
| 115 | Öffnung | | |

## Patentansprüche

1. Sensoreinrichtung (91) für die Bestimmung des Belagverschleißes bei einer Scheibenbremse mit einem Bremssattel (1) und mit einem in dem Bremssattel (1) angeordneten Bremsbetätigungsmechanismus (2), der ein Druckstück (4) aufweist, das mit einem Bremsbelag (6) unmittelbar oder mittelbar zusammenwirkt, so dass die Bewegung des Bremsbelags (6) der Bewegung des Druckstücks (4) entspricht, wobei die Sensoreinrichtung (91) als Einheit rückwärtig in das Gehäuse des Bremssattels (1) einsetzbar ist und das Gehäuse des Bremssattels (1) bis zu dem Druckstück (4) frei durchsetzt,
**dadurch gekennzeichnet, dass**
die Sensoreinrichtung (91) ein Übertragungselement (95;112) zum Übertragen der linearen Bewegung des Druckstücks (4) in eine Rotationsbewegung und ein Sensorelement (97) zur Erfassung der Rotationsbewegung aufweist, wobei das Übertragungselement ein an dem Druckstück (4) angreifendes Linearelement (112, 113, 114) aufweist, das relativ zu einem stationär, aber drehbar gelagerten Gewindeelement (95) verschieblich angeordnet ist, wobei das Linearelement (112, 113, 114) beim Verschieben das Gewindeelement (95) in Drehung versetzt, und wobei das Gewindeelement (95) an seinem bremsscheibenabgewandten Ende mit dem Sensorelement (97) berührungslos zusammenwirkt.

2. Sensoreinrichtung nach Anspruch 1, bei welcher das Sensorelement ein Hall-Sensor (97) ist und mit zumindest einem an dem bremsscheibenabgewandten Ende des Gewindeelements (95) angeordneten Magneten (108) zusammenwirkt.

3. Sensoreinrichtung nach Anspruch 1 oder 2, bei welcher die Gewindesteigung des Gewindeelements (95) derart gewählt ist, dass über die gesamte mögliche lineare Verschiebung des Linearelements (112, 113, 114) durch das Gewindeelement (95) maximal eine vollständige Drehbewegung durchgeführt wird.

4. Sensoreinrichtung nach einem der Ansprüche 1 bis 3, bei welcher das Linearelement (112, 113, 114) in Axialrichtung unter Vorspannung steht.

5. Scheibenbremse aufweisend eine Sensoreinrichtung nach den Ansprüchen 1 bis 4.

## Claims

1. Sensor device (91) for determining the lining wear in a disc brake having a brake caliper (1) and a brake actuation mechanism (2), which is arranged in the brake caliper (1) and comprises a thrust piece (4) which interacts directly or indirectly with a brake lining (6), so that the movement of the brake lining (6) corresponds to the movement of the thrust piece (4), the sensor device (91) being insertable as a unit rearwardly into the housing of the brake caliper (1) and freely penetrating the housing of the brake caliper (1) up to the thrust piece (4),
**characterised in that**
the sensor device (91) comprises a transmission element (95;112) for transmitting the linear movement of the thrust piece (4) into a rotational movement, and a sensor element (97) for detecting the rotational movement, wherein the transmission element has a linear element (112,113,114) which engages the thrust piece (4) and is arranged displaceably relative to a stationary but rotatably mounted threaded element (95), wherein the linear element (112,113,114) sets the threaded element (95) in rotation during displacement, and wherein the threaded element (95) cooperates contactlessly with the sensor element (97) at its end remote from the brake disc.

2. Sensor device according to claim 1, in which the sensor element is a Hall sensor (97) and cooperates with at least one magnet (108) arranged at the end of the threaded element (95) remote from the brake disc.

3. Sensor device according to claim 1 or 2, in which the thread pitch of the threaded element (95) is selected such that a maximum of one complete rotational movement is carried out by the threaded element (95) over the entire possible linear displacement of the linear element (112,113,114).

4. Sensor device according to one of claims 1 to 3, in which the linear element (112,113,114) is pre-tensioned in the axial direction.

5. Disc brake comprising a sensor device according to claims 1 to 4.

## Revendications

1. Ensemble capteur (91) pour la détermination de l'usure des garnitures dans un frein à disque avec un étrier de frein (1) et avec un mécanisme d'actionnement de frein (2) disposé dans l'étrier de frein (1), qui présente une pièce de pression (4) qui coopère directement ou indirectement avec une garniture de frein (6), de telle manière que le mouvement de la garniture de frein (6) corresponde au mouvement de la pièce de pression (4), dans lequel l'ensemble capteur (91) peut être inséré en bloc par l'arrière dans le boîtier de l'étrier de frein (1) et traverse librement le boîtier de l'étrier de frein (1) jusqu'à la pièce de pression (4),
**caractérisé en ce que** l'ensemble capteur (91) présente un élément de transmission (95; 112) pour la conversion du mouvement linéaire de la pièce de pression (4) en un mouvement de rotation et un élément de capteur (97) pour la détection du mouvement de rotation, dans lequel l'élément de transmission présente un élément linéaire (112, 113, 114) agissant sur la pièce de pression (4), qui est disposé de façon déplaçable par rapport à un élément fileté (95) monté de façon stationnaire mais rotative, dans lequel l'élément linéaire (112, 113, 114) met lors de son déplacement l'élément fileté (95) en rotation, et dans lequel l'élément fileté (95) coopère sans contact à son extrémité détournée du disque de frein avec l'élément de capteur (97).

2. Ensemble capteur selon la revendication 1, dans lequel l'élément de capteur est un capteur de Hall (97) et coopère avec au moins un aimant (108) disposé sur l'extrémité détournée du disque de frein de l'élément fileté (95).

3. Ensemble capteur selon la revendication 1 ou 2, dans lequel le pas du filet de l'élément fileté (95) est choisi de telle manière qu'au maximum un mouvement de rotation complet soit exécuté par l'élément fileté (95) sur la totalité du mouvement linéaire possible de l'élément linéaire (112, 113, 114).

4. Ensemble capteur selon l'une quelconque des revendications 1 à 3, dans lequel l'élément linéaire (112, 113, 114) se trouve sous précontrainte en direction axiale.

5. Frein à disque présentant un ensemble capteur selon les revendications 1 à 4.
